# EUROPÄISCHE PATENTSCHRIFT

(11) **EP 1 646 820 B1**
(45) Veröffentlichungstag und Bekanntmachung des Hinweises auf die Patenterteilung: **04.01.2012**
(21) Anmeldenummer: 04762409.3
(22) Anmeldetag: 15.07.2004
(51) Int. Cl.: F16L 15/04, F16B 33/00

(54) **SCHRAUBVERBINDUNGSELEMENT UND SCHUTZHÜLLE DAFÜR**
SCREW CONNECTION ELEMENT AND PROTECTING SLEEVE THEREFOR
ELEMENT DE RACCORD FILETE ET GAINE PROTECTRICE POUR CELUI-CI

(30) Priorität: 17.07.2003 DE 20311834 U; 30.12.2003 DE 20320226 U
(43) Veröffentlichungstag der Anmeldung: 19.04.2006
(73) Patentinhaber: Schneider, Harald, 34134 Kassel (DE); Schneider, Martin, 34277 Fuldabrück (DE); Balshüsemann, Uwe, 40547 Düsseldorf (DE)
(72) Erfinder: Schneider, Harald, 34134 Kassel (DE); Schneider, Martin, 34277 Fuldabrück (DE); Balshüsemann, Uwe, 40547 Düsseldorf (DE)
(74) Vertreter: Dantz, Jan Henning
(86) Internationale Anmeldenummer: PCT/DE2004/001556
(87) Internationale Veröffentlichungsnummer: WO 2005/010420

(56) Entgegenhaltungen:
- EP-A- 0 242 796
- EP-A- 1 004 804
- DD-A- 160 006
- US-A- 3 061 455
- US-A- 3 687 493

## Beschreibung

Die Erfindung betrifft ein Schraubverbindungselement nach dem Oberbegriff des Anspruchs 1 und eine auf dessen Außengewindeabschnitt aufgebrachte bzw. auf bringbare Schutzhülle.

Rohre, rohrartige Anschlüsse aufweisende Bauteile, Ventile, Armaturen od. dgl. sowie Anschluß- und Verlängerungsstücke dafür werden insbesondere im Sanitär- und Heizungsbereich, aber auch im Maschinenbau durchweg durch Schraubverbindungen miteinander verbunden. Dazu weist eines der zu verbindenden Teile einen Außengewindeabschnitt und das andere Teil einen entsprechenden Innengewindeabschnitt auf. Da beide Teile in der Regel von einem Fluid in Form einer Flüssigkeit oder eines Gases (z. B. Wasser oder Luft) durchströmt werden, müssen die Schraubverbindungen nicht nur den mechanischen Festigkeitsanforderungen genügen; sondern auch bei den üblichen Drücken (z. B. bis 10 bar) fluiddicht sein.

Während die Erfüllung der Festigkeitsanforderungen kein Problem darstellt, bereitet die Herstellung einer dauerhaft haltbaren Abdichtung immer noch Schwierigkeiten. Es ist zwar allgemein üblich, die Außengewindeabschnitte vor dem Fügen mit Hanffasern, Kunststoff- (Teflon-) bändern oder anderen Dichtmitteln zu belegen, doch hat sich diese Maßnahme unabhängig davon, ob die zusammenwirkenden Gewindeabschnitte aus Metall oder Kunststoff bestehen, als nicht ausreichend erwiesen. Ein Hauptgrund hierfür besteht darin, daß die Qualität der Dichtung meistens von der Sorgfalt abhängt, mit der die das Dichtmittel aufbringenden und dann die Schraubverbindung herstellenden Personen arbeiten. Im gewerblichen Bereich kann davon ausgegangen werden, daß zwar in den meisten Fällen gute Abdichtungen erhalten werden, die Zahl der unbrauchbaren Abdichtungen aber immer noch viel zu groß ist. Außerdem wird häufig nicht beachtet, daß Schraubverbindungen nach dem Festziehen oftmals wieder um bis zu 90° zurückgedreht werden müssen, um z.B. eine schief sitzende und daher optisch unschön angeordnete Armatur gerade zu stellen. Derartige Rückdrehungen haben nicht selten ein Undichtwerden der zunächst dichten Schraubverbindung zur Folge.

Zur Vermeidung derartiger Probleme ist es bekannt, einen der Gewindeabschnitte werksseitig mit einem integrierten Dichtmittel zu versehen, indem z. B. die Gewindegänge zumindest teilweise aus einem elastischen Material wie z. B. PEX oder EPDM hergestellt werden (EP 1 004 804 A1) oder ein Gewindeabschnitt mit einer Ringnut und einem in diese eingelegten Dichtelement versehen wird (EP 0 554 111 B1, EP 0 751 328 A1). Außerdem sind separate Dichtelemente bekannt, die jeweils einen auf einen Außengewindeabschnitt aufdrehbaren Anschlagring und eine an diesem befestigte, auf den Außengewindeabschnitt aufziehbare, aus Gummi, Kunststoff (Teflon) od. dgl. bestehende Dichtungsmasse aufweisen, die beim Herstellen der Schraubverbindung zwischen dem Anschlagring und dem Innengewindeabschnitt zusammengequetscht wird (EP 0 523 775 A1). Schließlich sind Gewindeverbindungen bekannt, deren Abdichtungen aus zwischen den Gewinden angeordneten Dichthülsen bestehen, die zum Aufschieben auf den Außengewindeabschnitt eingerichtet sind und z. B. aus einem in eine Folie eingekapselten Ring aus Hanf und Dichtungspaste oder aus einer Kunststofffolie bestehen, in der ein Dichtmittel in pastöser oder flüssiger Form angeordnet ist (EP-A-0 242 796). Alle diese Maßnahmen haben sich allerdings bisher als nicht zufriedenstellend erwiesen.

Ausgehend davon liegt der vorliegenden Erfindung die Aufgabe zugrunde, ein Schraubverbindungselement und eine dafür geeignete Schutzhülle zu schaffen, mittels derer auf einfache Weise eine dauerhaft dichte Schraubverbindung herstellbar ist, die auch um bis zu 90° zurück gedreht werden kann, ohne undicht zu werden, mittels derer ferner eine von der die Schraubverbindung herstellenden Person im wesentlichen unabhängige Dichtwirkung erzielt wird und mittels derer je nach Bedarf eine werksseitige Vormontage vorgenommen oder ein separates Zubehörteil für Reparaturarbeiten od. dgl. hergestellt werden kann.

Zur Lösung dieser Aufgabe dienen die kennzeichnenden Merkmale der Ansprüche 1 und 15.

Die Erfindung bringt den Vorteil mit sich, daß als Dichtmittel alle als geeignet erwiesenen Dichtmaterialien, insbesondere Hanffasern verwendet werden können. Sollen diese bereits werksseitig aufgebracht werden, um den jeweiligen Handwerker od. dgl. von dieser Arbeit zu entlasten, dient die erfindungsgemäße Schutzhülle insbesondere dem Zweck, das Dichtmittel auch während des Transports und der Lagerung in den Gewindegängen des Schraubverbindungselements zu halten und zu sichern. Ist es dagegen erwünscht, eine einfache und sichere Anbringung des Dichtmittels auch bei Reparaturarbeiten od. dgl. zu gewährleisten, wird das Dichtmittel zweckmäßig in die Schutzhülle integriert und diese außerdem so ausgebildet, daß sie auch nachträglich bzw. zu jedem gewünschten Zeitpunkt auf einen Außengewindeabschnitt aufgeschraubt werden kann. Unabhängig von ihrer Herstellungsart stellt die erfindungsgemäße Schutzhülle außerdem sicher, daß eine einmal hergestellte Schraubverbindung bei Bedarf um mindestens 90° zurückgedreht werden kann, ohne daß die Verbindung undicht wird. Vorteilhaft ist auch, daß an der Baustelle keine zusätzlichen Werkzeuge zur Applikation eines Dichtmittels benötig werden. Ein weiterer Vorteil der Erfindung besteht schließlich darin, daß die Verbindung auf einfache Weise weitgehend keimfrei gehalten werden kann, indem z. B. feine Fäden aus oligodynamisch wirkenden Metallen wie z. B. Kupfer in das Dichtmittel eingefügt werden.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert, in denen gleiche Teile mit gleichen Bezugszeichen versehen sind. Es zeigen:
Fig. 1 einen Längsschnitt durch eine erste Ausführungsform eines erfindungsgemäßen Schraubverbindungselements;
Fig. 2 in einem gegenüber Fig. 1 verkleinerten Maßstab einen Längsschnitt durch eine mit dem Schraubverbindungselement nach Fig. 1 hergestellte Schraubverbindung;
Fig. 3 einen Längsschnitt durch eine zweite Ausführungsform eines erfmdungsgemäßen Schraubverbindungselements;
Fig. 4 in einem gegenüber Fig. 3 verkleinerten Maßstab einen Längsschnitt durch eine mit dem Schraubverbindungselement nach Fig. 3 hergestellte Schraubverbindung;
Fig. 5 und 6 Längsschnitte durch je ein Innen- und Außenteil einer erfindungsgemäßen Schutzhülle; und
Fig. 7 eine erfindungsgemäße, aus den Teilen nach Fig. 3 und 4 zusammengesetzte Schutzhülle.

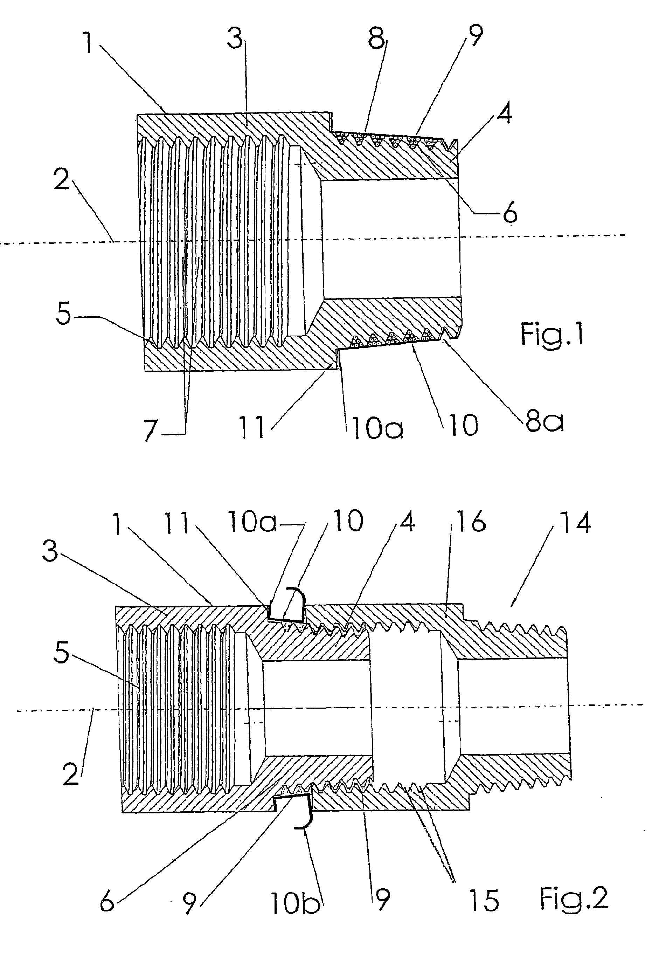

Fig. 1 zeigt ein Schraubverbindungselement 1 in Form eines rohrförmigen, vorzugsweise aus Metall hergestellten Nippels oder Verlängerungsstücks. Das Schraubverbindungselement 1 weist eine Längsachse 2 und zwei Anschlußenden 3 und 4 auf. Das Anschlußende 3 ist mit einem Innengewindeabschnitt 5 und das Anschlußende 4 mit einem Außengewindeabschnitt 6 versehen. Jeder Gewindeabschnitt 5, 6 weist in üblicher Weise eine Mehrzahl von Gewindegängen 7 bzw. 8 auf, die durch schraubenlinienförmig um die Längsachse 2 verlaufende Kanäle gebildet und zwischen Rippen angeordnet sind, die z. B. im wesentlichen dreieckförmige Querschnitte aufweisen.

Die Gewindegänge 8 des Außengewindeabschnitts 6 sind mit einem Dichtmittel 9 versehen, das werksseitig aufgebracht wird und im Ausführungsbeispiel aus miteinander verzwirnten Hanffasern besteht, die durch je sechs kleine Kreise angedeutet sind. Dabei ist klar, daß es sich vorzugsweise wie üblich um ein längeres Hanffaserbündel handelt, das vom einen oder anderen Ende des Außengewindeabschnitts 6 her in die Gewindegänge 8 eingelegt wird und daher wie diese schraubenlinienförmig um die Längsachse 2 verläuft.

Erfindungsgemäß ist das Schraubverbindungselement 1 weiter mit einer Schutzhülle 10 versehen, die aus einem flexiblen Material, vorzugsweise einem Kunststoff hergestellt, nach Art einer Hülse und im wesentlichen zylindrisch ausgebildet und koaxial auf dem Außengewindeabschnitt 6 angeordnet ist. Die Schutzhülle 10 besitzt einen im wesentlichen dem Außen bzw. Nenndurchmesser des Außengewindeabschnitts 4 entsprechenden Innendurchmesser, so daß sie die äußere Umfangsfläche des Außengewindeabschnitts 6 eng umschließt. Dadurch wird das Dichtmittel 9 fest und unverlierbar in den Gewindegängen 6 gehalten, solange die Schutzhülle 10 auf dem Außengewindeabschnitt 6 angeordnet ist. Die Schutzhülle 10 besitzt zweckmäßig eine solche axiale Länge, daß sie alle mit dem Dichtmittel 9 gefüllten Gewindegänge 8 abdeckt.

An einer Rückseite ist die Schutzhülle 10 vorzugsweise mit einem radial nach außen abstehenden Montageflansch 10a versehen, der im aufgezogenen Zustand nach Fig. 1 an einer radial nach außen erstreckten Schulter 11 anliegt, die am rückwärtigen Ende des Außengewindeabschnitts 6 vorgesehen ist. Besonders zweckmäßig ist es außerdem, den Montageflansch 10a mit einem Kleber an der Schulter 11 zu befestigen, damit die Schutzhülle 10 nicht ungewollt vom Außengewindeabschnitt 6 abgestreift werden kann.

An einem vorderen Ende des Anschlußendes 4 bleibt in Weiterbildung der Erfindung ein Gewindegang 8a des Außengewindeabschnitts 6 vom Dichtmittel 9 frei. An dieser Stelle ist die Schutzhülle 10 durch ein nach Erhitzung erfolgendes Einschrumpfen oder durch ein mit einem zangenartigen Werkzeug herbeigeführtes, radiales Eindrücken so verformt, daß sie in den Gewindegang 8a eintritt und vorzugsweise an dessen Wandungen anliegt, wie Fig. 1 deutlich zeigt. Dadurch wird in Richtung der Längsachse 2 eine formschlüssige Verbindung zwischen dem Anschlußende 4 und der Schutzhülle 10 hergestellt.

Die Schutzhülle 10 kann beispielsweise aus einer durch Tiefziehen hergestellten Hülse bestehen, die eine wenige hundertstel Millimeter dicke Umfangswand aufweist und z. B. aus PA 6, PET, PTFE oder anderen hygroskopischen Materialien, tiefziehbaren Folien od. dgl. hergestellt wird. Alternativ kann sie aber auch z. B. aus Hanf oder Zellulose hergestellt sein. Hierzu könnte eine durch Schmelzen von Hanffasern erhaltene, verflüssigte Zellulosemasse mit einer Schichtdicke von bis zu einigen Zehntel Millimetern auf einen Dorn aufgestrichen und nach dem Trocknen als fertiges Formteil von diesem abgezogen werden. Um diesen Vorgang zu erleichtern, könnte der Dorn zunächst mit einem Trennmittel bestrichen werden. Auch eine derart hergestellte Hülse, die nach dem Trocknen eine pappenartige Konsistenz hat, kann im Anschluß daran auf den Außengewindeabschnitt 6 aufgezogen werden.

Die Schutzhülle 10 wurde bisher als ein separat hergestelltes und erst später mit dem Anschlußende 4 verbundenes Teil beschrieben. Das hat den Vorteil-, daß die Schraubverbindungselemente 1 und die Schutzhüllen 10 von verschiedenen Herstellern hergestellt und die Schutzhüllen 10 dort, wo das Dichtmittel 9 in die Gewindegänge 8 eingelegt wird, an den Anschlußenden 4 angebracht werden können. Alternativ kann die Schutzhülle 10 aber auch als integrales, von vornherein fest mit dem Außengewindeabschnitt 6 verbundenes Element hergestellt werden. Hierzu wird beispielsweise eine flüssige Kunststoff- oder Zellulosemasse in ein Tauchbad gegeben und das Anschlußende 4 in diesem Tauchbad getränkt, so daß sich das Hüllenmaterial fest an die äußere Umfangswand des Anschlußendes 4 legt und dabei teilweise auch in die Gewindegänge 8 und 8a eindringt. In diesem Fall bilden das Schraubverbindungselement 1 und die Schutzhülle 10 eine fix und fertig vorfabrizierte Einheit.

Unabhängig von dem beschriebenen Herstellungsverfahren ergibt sich der Vorteil, daß die Schutzhülle 10 nach dem Einbringen des Dichtmittels 9 appliziert werden kann und den Außengewindeabschnitt 6 dann nicht nur vor einem ungewollten Herauslösen des Dichtmittels 9, sondern auch vor mechanischen Beschädigungen oder Schäden an den Dichtmitteln schützt, die sich in Folge der Handhabung der Schraubverbindungselemente 1 als Schüttgut beim Transport, bei der Lagerung oder bei einer sonstigen, vor der eigentlichen Anwendung erfolgenden Benutzung ergeben könnten.

Weiterhin stellt die Schutzhülle 10 sicher, daß der Anwender beim Zusammenfügen des Schraubverbindungselements 1 etwa mit einem zweiten solchen Schraubverbindungselement 14 (Fig. 2) nicht vor die Aufgabe gestellt wird, das Dichtmittel 9 selbst in die Gewindegänge 8 einbringen zu müssen. Der Anwender braucht vielmehr das mit der Schutzhülle 10 versehene Anschlußende 4 nur mit seinem Vorderende voran in ein mit einem entsprechenden Innengewinde 15 versehenes Anschlußende 16 des anzukoppelnden Schraubverbindungselements 14 einzudrehen. Die flexible Schutzhülle 10 wird dabei vom Innengewindeabschnitt 15 zusammen mit dem Dichtmittel 9 in die Gewindegänge 8 gedrückt. Sollte die Schutzhülle 10 beim weiteren Eindrehen der Gewindeabschnitte 6 und 15 aufgrund der Wirkung der scharfkantigen, die Gewindegänge bildenden Rippen abgeschert werden, dann bedeutet dies keinen Nachteil. Denn einerseits ist dann, wie Fig. 2 erkennen läßt, das Dichtmittel 9 bereits zwischen die vorderen Gewindegänge eingedrungen und in diesen verpresst, während andererseits die Schutzhülle 10, wie ein abgeschertes Teil 10b in Fig. 2 andeutet, erst nach und nach vom Außengewindeabschnitt 6 abgestreift wird, so daß das Dichtmittel 9 sicher in die Zwischenräume zwischen den Gewindeabschnitten eintritt und dadurch für die erforderliche Abdichtung sorgt. Bei Anwendung von Hanffasern als Dichtmittel gilt dies um so mehr, als die Anfangsenden dieser Fasern nach dem Zusammenbringen der ersten Gewindegänge der Teile 1 und 14 bereits fest zwischen diesen eingespannt sind und sich dann nicht mehr wegschieben bzw. wegziehen lassen.

Die Schutzhülle 10 wird zweckmäßig aus einem weichen und so flexiblen Material hergestellt, daß sie beim Herstellen der Schraubverbindung ohne weiteres zusammen mit dem Dichtmittel 9 in die Gewindegänge der zu fügenden Teile eintreten kann. Möglich wäre es aber auch, härtere Materialien zu verwenden und die Schutzhülle 10 an der Baustelle unmittelbar vor dem Fügen der Gewindeteile 8 und 15 abzuziehen. Auch in einem solchen Fall ist sichergestellt, daß das Dichtmittel 9 mit der erforderlichen Verteilung und in der erforderlichen Menge in den Gewindegängen 8 des Außengewindeabschnitts 6 angeordnet wird, bevor die Schraubverbindung hergestellt wird.

Zusätzlich zu den beschriebenen Maßnahmen kann vorgesehen sein, das Dichtmittel vor der Applikation mit einem dauerelastischen Kleber oder irgendeinem geeigneten Haftmittel zu benetzen, um es vor dem Aufbringen oder ggf. auch nach dem Abstreifen der Schutzhülle 10 sicher in den Gewindegängen 8 zu halten. Dabei ist jedoch darauf zu achten, daß im Fall von Schraubverbindungselementen 1 bzw. 14 für Trinkwasserleitungen od. dgl. nur lebensmittelechte Materialien verwendet werden. Das gilt auch hinsichtlich eines etwa zur Befestigung der Schutzhülle 10 an der Schulter 11 1 (Fig. 1) verwendeten Klebers.

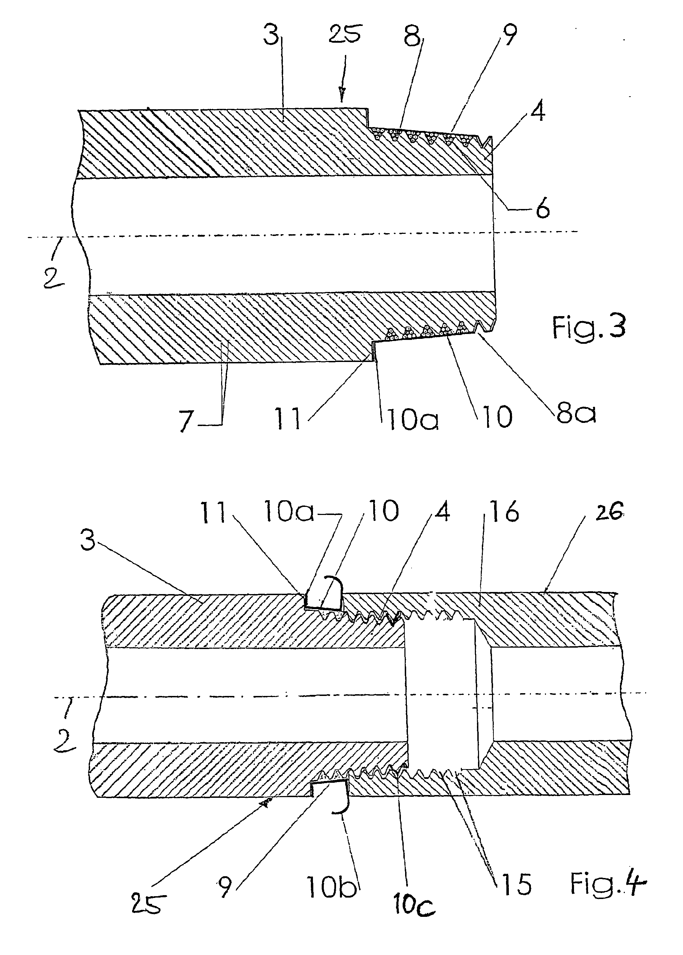

Die in Fig. 3 dargestellte Ausführungsform eines erfindungsgemäßen Schraubverbindungselements 25 unterscheidet sich von derjenigen nach Fig. 1 dadurch, dass sie nur einen Außengewindeabschnitt 6 aufweist. Das Schraubverbindungselement 25 ist dabei als das Ende einer Armatureinheit ausgeführt, die z. B. an eine wandbefestigte Versorgungsleitung 26 (Fig. 4) von Wasser od. dgl. anschließbar ist. Die Versorgungsleitung 26 weist dabei an einem Ende einen dem Außengewindeabschnitt 6 angepaßten Innengewindeabschnitt 15 entsprechend Fig. 2 auf. Über die Gewindeabschnitte 15, 6 können das Schraubverbindungselement 25 und die Versorgungsleitung 26 miteinander verbunden werden, wobei die erfindungsgemäße, auf dem Außengewinde 6 des Schraubverbindungselements 25 vorgesehene Schutzhülle 10 (Fig. 4) wie anhand der Fig. 2 beschrieben zusammen mit dem Dichtmittel 9 vom Innengeweindeabschnitt 15 in die Gewindegänge 8 gedrückt wird. Dabei kann, wie durch ein Bezugszeichen 10c in Fig. 3 angedeutet ist, der in dem Gewindegang 8a befindliche Teil der Schutzhülle 10 auch zwischen dem Innnen- und Außengewindeabschnitt 15, 6 verbleiben.

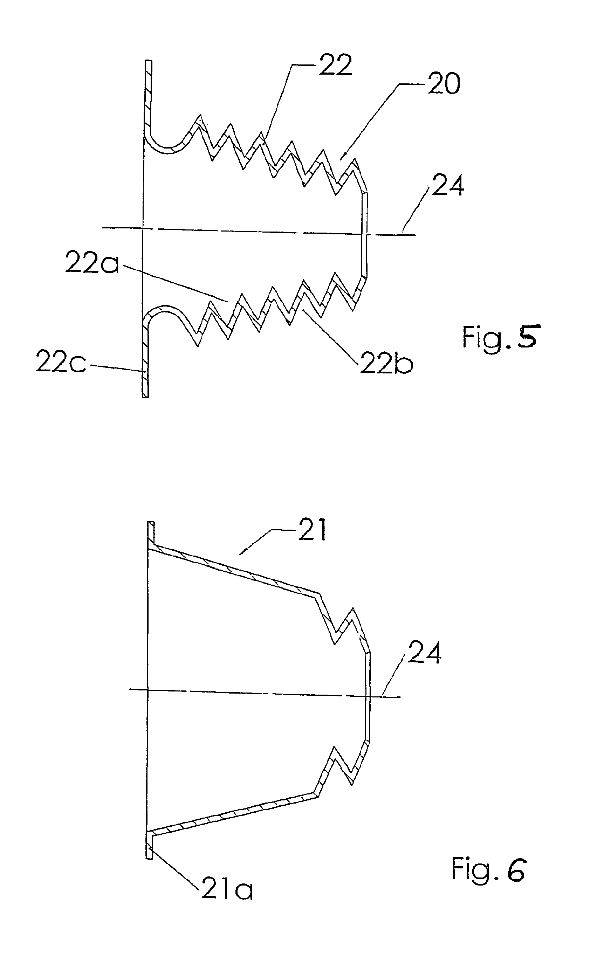

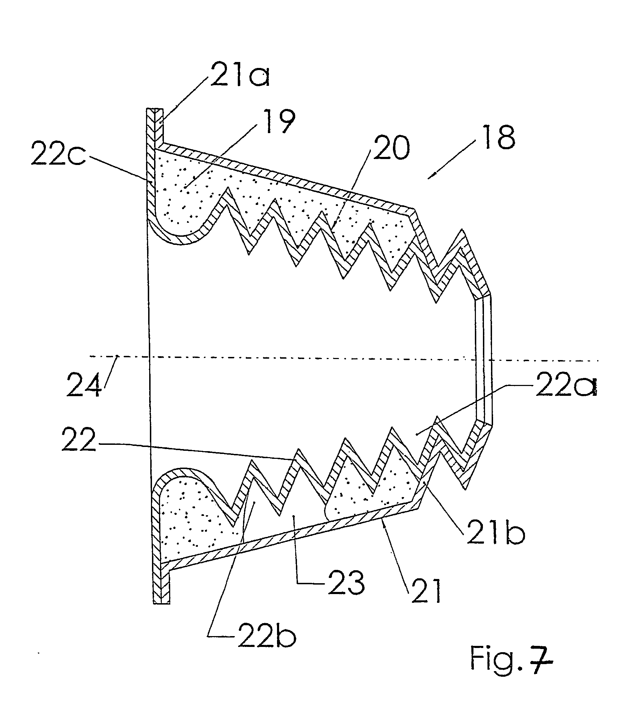

Das derzeit füram besten gehaltene Ausführungsbeispiel nach Fig. 5 bis 7 unterscheidet sich von dem der Fig. 1 bis 4 insbesondere dadurch, daß eine taschenartig ausgebildete Schutzhülle 18 (Fig. 7) vorgesehen und ein Dichtmittel 19 in die Schutzhülle 18 integriert ist.

Die Schutzhülle 18 enthält nach Fig. 5 und 7 ein Innenteil 20 und nach Fig. 6 und 7 ein Außenteil 21. Das Innenteil 20 besitzt eine Innenwand 22, die an einen gegebenen Außengewindeabschnitt (z. B. den Außengewindeabschnitt 6 nach Fig. 1 bis 4) angepaßt ist, an dem die Schutzhülle 18 befestigt werden soll. Die Wandstärke der Innenwand 22 ist vorzugsweise nur einige hundertstel Millimeter dick und entsprechend den Erhebungen und Vertiefungen eines Außengewindes im Längsschnitt zickzackförmig ausgebildet, wie Fig. 5 deutlich zeigt. Die Innenwand 22 besitzt daher einen inneren, auf den Außengewindeabschnitt z. B. des Schraubverbindungselements 1 passenden Innengewindeabschnitt mit Gewindegängen 22a und einen entsprechend geformten Außengewindeabschnitt mit Gewindegängen 22b. Am rückwärtigen Ende ist die Innenwand 22 mit einem radial nach außen ragenden Montageflansch 22c versehen, der sich im montierten Zustand z. B. an die Schulter 11 gemäß Fig. 1 bis 4 anlegen soll.

Die Form des Außenteils 21 entspricht im wesentlichen der Form der Schutzhülle 10 der Fig. 1 bis 4. Im Unterschied dazu ist allerdings der Innendurchmesser des Außenteils 21 vorzugsweise geringfügig größer als der Außendurchmesser des Innenteils 20, damit zwischen beiden ein Zwischeraum 23 entsteht, wie in einem aufgebrochenen Teil der Fig. 7 angedeutet ist. Dieser Zwischenraum 23 dient als Aufnahmeraum für das Dichtmittel 19, das wie im Fall der Fig. 1 bis 4 aus Hanffasern oder aus in Abhängigkeit vom Anwendungsfall gewählten Dichtstoffen bestehen kann, die insbesondere in die an der Außenseite der Innenwand 22 gebildeten Gewindegänge 22b des Innenteils 20 eingelegt und in Achsrichtung schraubenlinienförmig gewickelt werden. An seinem rückwärtigen Ende weist das Außenteil 21 analog zu Fig. 1 bis 4 einen radial nach außen ragenden Montageflansch 21a auf, während es am Vorderende analog zu Fig. 1 mit einer Eindrückung bzw. Sicke 21b versehen wird (Fig. 7).

Das Außenteil 21 wird nach dem Einlegen des Dichtmittels 19 in die Gewindegänge 22b bzw. den Zwischenraum 23 koaxial zu einer gemeinsamen Längsachse 24 auf das Innenteil 20 aufgezogen, bis die Montageflansche 22c, 21a aneinanderliegen. Beide Montageflansche 22c, 21a können dann durch Kleben, Verschweißen oder ein anderes geeignetes Fügeverfahren miteinander verbunden werden. Außerdem wird das Außenteil 21 nach dem Aufziehen auf das Innenteil 20 analog zu Fig. 1 bis 4 mit der Eindrückung 21b versehen, die in einen vom Dichtmittel 19 freien Außengewindegang 22b des Innenteils 20 eintritt. Im Unterschied zu Fig. 1 und 2 liegt daher einerseits das Dichtmittel 19 nicht unmittelbar in den Gewindegängen des jeweiligen Schraubverbindungselements 1, sondern in den Gewindegängen des dünnen Innenteils 20, während andererseits das Außenteil 21 nicht unmittelbar am Schraubverbindungselement 1, sondern an entsprechend ausgebildeten Abschnitten des Innenteils 20 befestigt wird. Dabei ist klar, daß der Innendurchmesser des Außenteils 21 im wesentlichen dem Außendurchmesser des Innenteils 20 entspricht und der Zwischenraum 23 daher im wesentlichen durch die v-förmigen Außengewindegänge 22b des Innenteils 20 gebildet sein kann.

Die Schutzhülle 18 nach Fig. 5 bis 7 bietet den Vorteil, daß sie nachträglich, z. B. an einer Baustelle, koaxial auf die Außengewindeabschnitte 6 von Schraubverbindungselementen 1 bzw. 25 entsprechender Größe aufgeschraubt werden kann. Das ist insbesondere bei Reparaturarbeiten erwünscht, wenn eine mit einem bereits vorhandenen Schraubverbindungselement hergestellte Verbindung undicht geworden ist. Möglich ist es aber wie im Fall der Fig. 1 bis 4 auch, die Schutzhüllen 18 werksseitig auf die Schraubverbindungselemente 1 aufzudrehen, um diese einerseits mit einem werksseitig applizierten Dichtmittel 19 zu versehen, andererseits dieses und auch die Gewindegänge der Schraubverbindungselemente 1 beim Transport, bei der Lagerung usw. zu schützen.

Das Innenteil 20 besteht vorzugsweise aus einem weichen, schmiegsamen Material, da es nach dem Aufbringen auf einen Außengewindeabschnitt 6 erhalten bleibt und nicht nur in die Gewindegänge z. B. des Schraubgewindeelements 1, sondern möglichst auch in alle in diesen vorhandenen Riefen od. dgl. eindringen soll, wenn beim Fügen der Schraubverbindung ein radial nach innen wirkender Druck auf das Dichtmittel 19 ausgeübt wird. Das Außenteil 21 kann dagegen wie die Schutzhülle 10 nach Fig. 1 bis 4 aus einem härteren Material bestehen und beim Fügen der Schraubverbindung abgeschert oder nach hinten weggeschoben werden, wie in Fig. 2 und 4 durch das Bezugszeichen 10b angedeutet ist, oder beim Fügen zwischen den Innen und Außen gewindeabschnitten 15, 6 verbleiben.

Die Herstellung der Teile 20 und 21 kann im wesentlichen auf dieselbe Weise erfolgen, wie oben für die separat herzustellende Schutzhülle 10 beschrieben ist.

Die Schutzhüllen 10 und 18 können mit ihren auf die Außengewindeabschnitte 6 aufziehbaren Abschnitten im wesentlichen zylindrisch oder leicht konisch ausgebildet oder sonstwie an die Gewindeformen der Schraubverbindungselemente angepaßt sein, wie es beispielsweise bei Schraubverbindungselementen erforderlich sein kann, die mit NPT-Gewinden (National Pipe Taper), BSP-Gewinden (British Standard Pipe) usw. versehen sind.

Der Vorteil von Dichtmitteln aus Hanf besteht darin, daß Hanf beim Feuchtwerden quillt und daher keine Neigung dazu besitzt, undicht zu werden, sondern allenfalls eine noch stärkere Abdichtung bewirkt. Zur Verstärkung dieses Effekts können die Schutzhüllen 10 und 18 bzw. deren Teile 20, 21 mit Vorteil perforiert werden, wobei die äußeren Konturen der Löcher im Prinzip nach Belieben gewählt werden können, während die zweckmäßige Größe, Zahl und Verteilung der Löcher anhand des Einzelfalls festzulegen und ggf. durch Versuche zu ermitteln sind. Alternativ können aber auch andere Dichtmittel, vorzugsweise mit entsprechenden Eigenschaften, verwendet werden. Im Fall der Fig. 5 bis 7 wäre sogar die Anwendung fließfähiger Materialien denkbar, die auch in Pasten- oder Pulverform vorliegen können und beim Fügen der Schraubverbindung tief in die zu dichtenden Gewindeabschnitte eingepreßt werde

Die Erfindung ist nicht auf die beschriebenen Ausführungsbeispiele beschränkt, die auf vielfache Weise abgewandelt werden könnten. Dies gilt insbesondere für die im Einzelfall vorgesehenen Größen, Materialien und Formen der verschiedenen Teile.

Weiter ist der Ausdruck "Schraubverbindungselement" im weitesten Sinne zu verstehen. Die erfindungsgemäßen Schraubverbindungselemente können z. B. zur Verbindung mit entsprechenden Verbindungselementen eingerichtet sein. Möglich wäre ferner, sie fest oder lösbar mit ihnen zugeordneten Gewindeabschnitten von Rohren, Ventilen, Armaturen od. dgl. zu verbinden. Schließlich ist klar, daß die beschriebenen Dichtmittel und Schutzhüllen auch an den Gewindeteilen von Rohren, Ventilen, Armaturen usw. angebracht werden können, die dann mit an sich beliebigen, entsprechende Gewindeabschnitte aufweisenden Schraubverbindungselementen kombiniert werden.

Gemäß einer besonders vorteilhaften Weiterbildung der Erfindung wird den Hanffasern bzw. dem im Einzelfall verwendeten Dichtmittel 9 eine ausreichende Anzahl dünner Drähte aus Kupfer, Silber oder einem anderen oligodynamisch wirkenden Metall beigemischt, insbesondere z. B. eingeflochten. Dabei wird der Vorteil genutzt, daß oligodynamisch wirkende Metalle das Wachstum verschiedener Mikroorganismen hemmen oder diese Mikroorganismen abtöten, wie dies z. B. für Kupfer mit Bezug auf Algen oder Silber mit Bezug auf Schimmelpilze, Algen oder Bakterien bekannt ist. Mit derartigen oder anderen Materialien, die Keime und/oder Bakterien abtöten oder deren Wachstum hemmen, können die beschriebenen Dichtungen gleichzeitig weitgehend bakterien- und keimfrei gemacht bzw. gehalten werden, um dadurch einschlägigen Normen zu genügen. Anstelle feiner, z. B. maximal 2/10 Millimeter starker Schwermetalldrähte können auch Schwermetallpulver verwendet werden, die in geeigneten Mengen z. B. denjenigen Dichtmitteln 19 beigemischt werden, die sich in den von den Schutzhüllen 18 nach Fig. 5 bis 7 gebildeten Taschen befinden.

Als weitere Materialien zur Hemmung und/oder Abtötung von Keimen und/oder Bakterien eignen sich im Rahmen der vorliegenden Erfindung verschiedene antimikrobielle Kunststoffadditive, wie sie z. B. von der Fa. Ciba Spezialitätenchemie Lampertheim GmbH mit Sitz in D-68619 Lampertheim unter den Bezeichnungen "Irgaguard" vertrieben werden. Als am besten geeignet hat sich hier das Material "Irgaguard F 3000" erwiesen. Dieses Material wird vorzugsweise in Pulverform dem Granulat beigemischt, aus dem zunächst durch Extrudieren die oben beschriebenen Folien und danach durch Tiefziehen der Folien die Schutzhüllen 10, 18 hergestellt werden. Alternativ kann das antimikrobakterielle Kunststoffadditiv aber auch der Kunststoff oder Zellulosemasse beigemischt werden, aus dem die Schutzhüllen als Formteile hergestellt werden.

Unabhängig vom Herstellungsverfahren bringen Dichtmittel, die mit einem Keime und/oder Bakterien abtötenden und/oder hemmenden Mittel angereichert sind, den Vorteil mit sich, daß sie hygienisch und physiologisch unbedenklich und insbesondere für die Anwendung im Trinkwasserbereich geeignet sind. Die erfindungsgemäßen Schraubverbindungen genügen daher den Vorschriften, wie sie z. B. vom DVGW (Deutscher Verein des Gas- und Wasserfaches e. V., Bonn) im Hinblick auf die Vermehrung von Mikroorganismen auf Werkstoffen für den Trinkwasserbereich herausgegeben wurden.

Weiterhin können die beschriebenen Schutzhüllen entsprechend den vorkommenden Normgrößen der üblichen Schraubverbindungselemente in verschiedenen Größen hergestellt und angeboten werden. Aber auch die Maßnahmen, die oben zur Befestigung der Schutzhüllen an den Schraubverbindungselementen oder der einzelnen Teile der Schutzhüllen untereinander beispielhaft angegeben sind, können je nach Bedarf variiert werden. Auch die Herstellung der Schutzhüllen ist im Prinzip in weiten Grenzen variierbar. Außerdem ist klar, daß die Schutzhüllen 10, 18 an ihren Vorderenden, d. h. dort, wo sie in einen zugehörigen Innengewindeabschnitt einzudrehen sind, zweckmäßig mit Einführungsschrägen versehen oder in anderer Weise ausgebildet werden, um den Einführungsvorgang zu erleichtern.

## Patentansprüche

1. Schraubverbindungselement mit einem Außengewindeabschnitt (6) und einem in dessen Gewindegängen (8) angeordneten Dichtmittel (9) und einer den Außengewindeabschnitt (6) umgebenden, aus einem flexiblen Material hergestellten und zum Halten des Dichtmittels (9) in den Gewindegängen (8) bestimmten Schutzhülle (10), **dadurch gekennzeichnet, daß** das Dichtmittel (9) aus einem langfaserigen oder fadenförmigen Material gebildet ist, ein am vorderen Ende des Außengewindeabschnitts (6) liegender Gewindegang (8a) frei von dem Dichtmittel (9) ist und die Schutzhülle (10) in Achsrichtung des Außengewindeabschnitts (6) formschlüssig mit diesem Gewindegang (8a) verbunden ist.

2. Schraubverbindungselement nach Anspruch 1, **dadurch gekennzeichnet, daß** die Schutzhülle (10) durch einen Tauch- oder Spritzvorgang auf den Außengewindeabschnitt (6) aufgebracht ist.

3. Schraubverbindungselement nach Anspruch 1, **dadurch gekennzeichnet, daß** die Schutzhülle (10) aus einer durch Tiefziehen hergestellten, auf den Außengewindeabschnitt (6) aufgezogenen Hülse besteht.

4. Schraubverbindungselement nach Anspruch 2 oder 3, **dadurch gekennzeichnet, daß** die Schutzhülle (10) an ihrer Rückseite mit einem Montageflansch (10a, 22c) versehen ist.

5. Schraubverbindungselement nach Anspruch 4, **dadurch gekennzeichnet, daß** der Montageflansch (10a, 22c) an einer am rückwärtigen Ende des Außengewindeabschnitts (6) vorgesehenen Schulter (11) anliegt und mit dieser verbindbar ist.

6. Schraubverbindungselement nach Anspruch 5, **dadurch gekennzeichnet, daß** der Montageflansch (14a, 22c) mit der Schulter (11) durch Kleben verbindbar ist.

7. Schraubverbindungselement nach einem der Ansprüche 1 bis 6, **dadurch gekennzeichnet, daß** die formschlüssige Verbindung zwischen der Schutzhülle (10) und dem Gewindegang (8a) durch eine derartige Verformung der Schutzhülle (10) an ihrem Vorderende hergestellt ist, daß dieses in den Gewindegang (8a) eintritt.

8. Schraubverbindungselement nach Anspruch 7, **dadurch gekennzeichnet, daß** die formschlüssige Verbindung durch Einschrumpfen oder Eindrücken hergestellt ist.

9. Schraubverbindungselement nach einem der Ansprüche 1 bis 8, **dadurch gekennzeichnet, daß** das Dichtmittel (9) an den Gewindegängen (8) des Außengewindeabschnitts (6) unmittelbar anliegt und die Schutzhülle (10) einen im wesentlichen dem Außendurchmesser des Außengewindeabschnitts (6) entsprechenden Innendurchmesser aufweist.

10. Schraubverbindungselement mit einem Außengewindeabschnitt (6), einem in dessen Gewindegängen (8) angeordneten Dichtmittel (19) und einer den Außengewindeabschnitt (6) umgebenden, aus einem flexiblen Material hergestellten und zum Halten des Dichtmittels (19) in den Gewindegängen (8) bestimmten Schutzhülle (18), wobei die Schutzhülle (18) ein Innenteil (20) mit einer an den Außengewindeabschnitt (6) angepaßten Innenwand (22) und ein das Innenteil (20) umgebendes Außenteil (21) enthält und wobei das Dichtmittel (19) zwischen dem Innen- und dem Außenteil (20, 21) angeordnet ist, **dadurch gekennzeichnet, daß** das Dichtmittel aus einem langfaserigen oder fadenförmigen Material gebildet ist und das Innen- und das Außenteil (20, 21) an ihren Vorderenden in Achsrichtung formschlüssig miteinander verbindbar sind.

11. Schraubverbindungselement nach Anspruch 10, **dadurch gekennzeichnet, daß** die formschlüssige Verbindung zwischen dem Innenteil (20) und dem Außenteil (21) durch eine derartige Verformung des Außenteils (21) an seinem Vorderende hergestellt ist, daß dieses in einen Gewindegang (22b) des Innenteils (20) eintritt, wobei dieser Gewindegang (22b) frei von dem Dichtmittel (19) ist.

12. Schraubenverbindungselement nach Anspruch 10 oder 11, **dadurch gekennzeichnet, daß** das Innenteil und das Außenteil (20, 21) an ihren rückwärtigen Enden mit zur gegenseitigen Verbindung bestimmten Montageflanschen (21a, 22c) versehen sind.

13. Schraubverbindungselement nach einem der Ansprüche 1 bis 12, **dadurch gekennzeichnet, daß** das Dichtmittel (9, 19) aus Hanffasern besteht.

14. Schutzhülle für ein Schraubverbindungselement (1, 25), das mit einem zur Aufnahme eines Dichtmittels (9, 19) bestimmten Außengewindeabschnitt (6) versehen ist, in Form einer zum Aufziehen auf den Außengewindeabschnitt (6) bestimmten Hülse, die ein Innenteil (20) mit einer an den Außengewindeabschnitt (6) angepaßten Innenwand (22), ein das Innenteil (20) umgebendes Außenteil (21) und ein zwischen dem Innen- und Außenteil (20, 21) angeordnetes Dichtmittel (19) enthält, **dadurch gekennzeichnet, daß** das Dichtmittel aus einem langfaserigen oder faden förmigen Material gebildet ist und das Innen- und das Außenteil (20, 21) an ihren Vorderenden in Achsrichtung des Außengewindeabschnitts (6) formschlüssig miteinander verbindbar sind.

15. Schutzhülle nach Anspruch 14, **dadurch gekennzeichnet, daß** die formschlüssige Verbindung zwischen dem Innenteil (20) und dem Außenteil (21) durch eine derartige Verformung des Außenteils (21) an seinem Vorderende hergestellt ist, daß dieses in einem Gewindegang (22b) des Innenteils (20) eintritt, wobei dieser Gewindegang (22b) frei von dem Dichtmittel (19) ist.

16. Schutzhülle nach Anspruch 14 oder 15, **dadurch gekennzeichnet, daß** das Innenteil und das Außenteil (20, 21) durch ein an ihren rückwärtigen Enden mit zur gegenseitigen Verbindung bestimmten Montageflanschen (21a, 22c) versehen sind.

17. Schraubverbindungselement oder Schutzhülle nach einem der Ansprüche 1 bis 16, **dadurch gekennzeichnet, daß** das Dichtmittel (9, 19) aus Hanffasern besteht.

18. Schraubverbindungselement oder Schutzhülle nach Anspruch 17, **dadurch gekennzeichnet, daß** das Innen- und/oder das Außenteil (20, 21) aus einem Verbundwerkstoff gebildet ist.

19. Schraubverbindungselement oder Schutzhülle nach einem der Ansprüche 10 bis 18, **dadurch gekennzeichnet, daß** das Innen- und/oder das Außenteil (20, 21) proteinhaltige Fasern enthält.

20. Schraubverbindungselement oder Schutzhülle nach einem der Ansprüche 10 bis 19, **dadurch gekennzeichnet, daß** das Innen- und/oder das Außenteil (20, 21) Zellulose enthält.

21. Schraubverbindungselement oder Schutzhülle nach einem der Ansprüche 10 bis 20, **dadurch gekennzeichnet, daß** das Innen- und/oder das Außenteil (20, 21) mineralische Bestandteile enthält.

22. Schraubverbindungselement oder Schutzhülle nach einem der Ansprüche 10 bis 21, **dadurch gekennzeichnet, daß** das Innen- und/oder das Außenteil (20, 21) jeweils wenigstens ein Polymer enthält.

23. Schraubverbindungselement oder Schutzhülle nach einem der Ansprüche 1 bis 22, **dadurch gekennzeichnet, daß** das Dichtmittel (9, 19) mit einem das Wachstum von Keimen und/oder Bakterien hemmenden und/oder diese abtötenden Material angereichert ist.

24. Schraubverbindungselement oder Schutzhülle nach Anspruch 23, **dadurch gekennzeichnet, daß** das Material in Draht- oder Pulverform vorliegt.

25. Schraubverbindungselement oder Schutzhülle nach Anspruch 23 oder 24, **dadurch gekennzeichnet, daß** das Material aus einem Schwermetall besteht.

26. Schraubverbindungselement oder Schutzhülle nach Anspruch 25, **dadurch gekennzeichnet, daß** das Material Kupfer ist.

## Claims

1. A screw connection element, comprising an outer threaded portion (6) and a sealing means (9) disposed in threads (8) of the outer threaded portion (6) and a protective covering (10) surrounding the outer threaded portion (6) for retaining the sealing means (9) in the threads (8) and composed of a flexible material, **characterized in that** the sealing means (9) is composed of a long fibrous material or a thread-shaped material, and a thread (8a) situated at a front end of the outer threaded portion (6) is free of the sealing means (9) and the protective covering (10) is connected in a form-fitting manner to the thread (8a) in an axial direction of the outer threaded portion (6).

2. The screw connection element according to claim 1, **characterized in that** the protective covering (10) is applied to the outer threaded portion (6) by means of an immersion or spraying process.

3. The screw connection element according to claim 1, **characterized in that** the protective covering (10) is comprised of a sheath which is produced by means of deep-drawing and which is screwed on the outer threaded portion.

4. The screw connection element according to claims 2 or 3, **characterized in that** the protective covering (10) is provided at its rear ends with a mounting flange (10a, 22c).

5. The screw connection element according to claim 4, **characterized in that** the mounting flange (10a, 22c) abuts on a shoulder (11) situated at the rear end of the outer threaded portion (6) and is connectible to the shoulder (11).

6. The screw connection element according to claim 5, **characterized in that** the mounting flange (10a, 22c) is connectible to the shoulder (11) by means of gluing.

7. The screw connection element according to one of claims 1 to 6, **characterized in that** the form-fitting connection between the protective cover (10) and the thread (8a) is configured as a deformed portion of the protective cover (10) at the front end such that it enters into the thread (8a).

8. The screw connection element according to claim 7, **characterized in that** the form-fitting connection is created by means of shrinking or indenting.

9. The screw connection element according to one of claims 1 to 8, **characterized in that** the sealing means (9) abuts directly on the threads (8) of the outer threaded portion (6) and the protective covering (10) has an inner diameter substantially corresponding to an outer diameter of the outer threaded portion (6).

10. A screw connection element, comprising an outer threaded portion (6), a sealing means (19) disposed in threads (8) of the outer threaded portion (6) and a protective covering (18) which surrounds the outer threaded portion (6) for retaining the sealing means (19) in the threads (8) and composed of a flexible material, wherein the protective covering (18) includes an inner part (20) with an inner wall (22) which is adapted to the outer threaded portion (6) and an outer part (21) which surrounds the inner part (20) and wherein the sealing means (19) is disposed between the inner and outer parts (20, 21), **characterized in that** the sealing means is composed of a long fibrous material or a thread-shaped material and that the inner and outer parts (20, 21) are connectible to each other in a form-fitting manner at their front ends in an axial direction.

11. The screw connection element according to claim 10, **characterized in that** the form-fitting connection between the inner part (20) and the outer part (21) is configured by the outer part (21) deformed at the front end so that it enters into a thread (22b) of the inner part (20), while the thread (22b) is free of the sealing means (19).

12. The screw connection element according to claim 10 or 11, **characterized in that** the inner part and the outer part (20, 21) are provided at their rear ends with mounting flanges (21 a, 22c) for mutual connection.

13. The screw connection element according to one of claims 1 to 12, **characterized in that** the sealing means (9, 19) is comprised of hemp fibers.

14. A protective covering for a screw connection element (1, 25), provided with an outer threaded portion (6) for receiving a sealing means (9, 19), the protective covering comprising a sheath for screwing onto the outer threaded portion (6), which contains an inner part (20) with an inner wall (22) which substantially corresponds to the outer threaded portion (6), and an outer part (21) surrounding the inner part (20) and the sealing means (19) between the inner and the outer part (20, 21), **characterized in that** the sealing means is comprised of a long fibrous material or a thread-shaped material and the inner and the outer part (20, 21) are connectible to each other in a form-fitting manner at their front ends in an axial direction of the outer threaded portion (6).

15. The protective covering according to claim 14, **characterized in that** the form-fitting connection between the inner part (20) and the outer part (21) is configured as a deformed portion of the outer part (21) at the front end such that it enters into a thread (22b) of the inner part (20), while the thread (22b) of the inner part (20) is free of the sealing means (19).

16. The protective covering according to claim 14 or 15, **characterized in that** the inner part and the outer part (20, 21) are provided at the rear ends with mounting flanges (21 a, 22c) for mutual connection.

17. The screw connection element or a protective covering according to one of claims 1 to 16, **characterized in that** the sealing means (9, 19) consists of hemp fibers.

18. The screw connection element or a protective covering according to claim 17, **characterized in that** the inner and/or the outer part (20, 21) is made of a composite material.

19. The screw connection element or a protective covering according to one of claims 10 to 18, **characterized in that** the inner and/or the outer part (20, 21) contains protein-containing fibers.

20. The screw connection element or a protective covering according to one of claims 10 to 19, **characterized in that** the inner and/or the outer part (20, 21) contains cellulose.

21. The screw connection element or a protective covering according to one of claims 10 to 20, **characterized in that** the inner and/or the outer part (20, 21) contains mineral components.

22. The screw connection element or a protective covering according to one of claims 10 to 21, **characterized in that** the inner and/or the outer part (20, 21) contains respectively at least one polymer.

23. The screw connection element or a protective covering according to one of claims 1 to 22, **characterized in that** the sealing means (9, 19) is enriched with a material selected from the group consisting of a material which restricts a growth of germs and/or bacteria and a material which destroys germs and/or bacteria.

24. The screw connection element or a protective covering according to claim 23, **characterized in that** the material is provided in the form of a wire or a powder.

25. The screw connection element or a protective covering according to claim 23 or 24, **characterized in that** the material consists of a heavy metal.

26. The screw connection element or a protective covering according to claim 25, **characterized in that** the material is copper.

## Revendications

1. Elément de raccord fileté avec une section à filetage extérieur (6) et un moyen d'étanchéité (9) disposé dans ses pas de filet (8) et une gaine protectrice (10) entourant la section à filetage extérieur (6), fabriquée en un matériau souple et destinée à retenir le moyen d'étanchéité (9) dans les pas de filet (8), **caractérisé en ce que** le moyen d'étanchéité (9) est formé d'un matériau à fibres longues ou filiforme, un pas de filet (8a) situé à l'extrémité avant de la section à filetage extérieur (6) est dépourvu du moyen d'étanchéité (9) et la gaine protectrice (10) est reliée dans le sens axial de la section à filetage extérieur (6) par concordance de forme à son pas de filet (8a).

2. Elément de raccord fileté selon la revendication 1, **caractérisé en ce que** la gaine protectrice (10) est appliquée sur la section à filetage extérieur (6) par un procédé d'immersion ou de pulvérisation.

3. Elément de raccord fileté selon la revendication 1, **caractérisé en ce que** la gaine protectrice (10) se compose d'une douille fabriquée par emboutissage profond, montée sur la section à filetage extérieur (6).

4. Elément de raccord fileté selon la revendication 2 ou 3, **caractérisé en ce que** la gaine protectrice (10) est dotée sur sa face arrière d'une bride de montage (10a, 22c).

5. Elément de raccord fileté selon la revendication 4, **caractérisé en ce que** la bride de montage (10a, 22c) s'appuie contre un épaulement (11) prévu à l'extrémité arrière de la section à filetage extérieur (6) et peut être reliée à celui-ci.

6. Elément de raccord fileté selon la revendication 5, **caractérisé en ce que** la bride de montage (10a, 22c) peut être reliée à l'épaulement (11) par collage.

7. Elément de raccord fileté selon l'une quelconque des revendications 1 à 6, **caractérisé en ce que** la liaison par concordance de forme entre la gaine protectrice (10) et le pas de filet (8a) est établie par une déformation de la gaine protectrice (10) à son extrémité avant telle que celle-ci pénètre dans le pas de filet (8a).

8. Elément de raccord fileté selon la revendication 7, **caractérisé en ce que** la liaison par concordance de forme est établie par rétrécissement ou enfoncement.

9. Elément de raccord fileté selon l'une quelconque des revendications 1 à 8, **caractérisé en ce que** le moyen d'étanchéité (9) s'appuie directement contre les pas de filet (8) de la section à filetage extérieur (6) et la gaine protectrice (10) présente un diamètre intérieur correspondant essentiellement au diamètre extérieur de la section à filetage extérieur (6).

10. Elément de raccord fileté avec une section à filetage extérieur (6), un moyen d'étanchéité (19) disposé dans ses pas de filet (8) et une gaine protectrice (18) entourant la section à filetage extérieur (6), fabriquée en un matériau souple et destinée à retenir le moyen d'étanchéité (19) dans les pas de filet (8), la gaine protectrice (18) comprenant un élément intérieur (20) avec une paroi intérieure (22) adaptée à la section à filetage extérieur (6) et un élément extérieur (21) entourant l'élément intérieur (20) et le moyen d'étanchéité (19) étant disposé entre l'élément intérieur et l'élément extérieur (20, 21), **caractérisé en ce que** le moyen d'étanchéité est formé d'un matériau à fibres longues ou filiforme et l'élément intérieur et l'élément extérieur (20, 21) peuvent être reliés l'un à l'autre par concordance de forme à leurs extrémités avant dans le sens axial.

11. Elément de raccord fileté selon la revendication 10, **caractérisé en ce que** la liaison par concordance de forme entre l'élément intérieur (20) et l'élément extérieur (21) est établie par une déformation de l'élément extérieur (21) à son extrémité avant telle que celle-ci pénètre dans un pas de filet (22b) de l'élément intérieure (20), ce pas de filet (22b) étant dépourvu du moyen d'étanchéité (19).

12. Elément de raccord fileté selon la revendication 10 ou 11, **caractérisé en ce que** l'élément intérieur et l'élément extérieur (20, 21) sont dotés à leurs extrémités arrière de brides de montage (21 a, 22c) destinées à la liaison réciproque.

13. Elément de raccord fileté selon l'une quelconque des revendications 1 à 12, **caractérisé en ce que** le moyen d'étanchéité (9, 19) est constitué de fibres de chanvre.

14. Gaine protectrice pour un élément de raccord fileté (1, 25), qui est doté d'une section à filetage extérieur (6) destinée à recevoir un moyen d'étanchéité (9, 19), en forme de douille destinée à être montée sur la section à filetage extérieur (6) qui comprend un élément intérieur (20) avec une paroi intérieure (22) adaptée à la section à filetage extérieur (6), un élément extérieur (21) entourant l'élément intérieur (20) et un moyen d'étanchéité (19) disposé entre l'élément intérieur et extérieur (20, 21), **caractérisée en ce que** le moyen d'étanchéité est formé d'un matériau à fibres longues ou filiforme et l'élément intérieur et l'élément extérieur (20, 21) peuvent être reliés l'un à l'autre par concordance de forme à leurs extrémités avant dans le sens axial de la section à filetage extérieur (6).

15. Gaine protectrice selon la revendication 14, **caractérisée en ce que** la liaison par concordance de forme entre l'élément intérieur (20) et l'élément extérieur (21) est établie par une déformation de l'élément extérieur (21) à son extrémité avant telle que celle-ci pénètre dans un pas de filet (22b) de l'élément intérieur (20), ce pas de filet (22b) étant dépourvu du moyen d'étanchéité (19).

16. Gaine protectrice selon la revendication 14 ou 15, **caractérisée en ce que** l'élément intérieur et l'élément extérieur (20, 21) sont dotés à leurs extrémités arrière de brides de montage (21a, 22c) destinées à la liaison réciproque.

17. Elément de raccord fileté ou gaine protectrice selon l'une quelconque des revendications 1 à 16, **caractérisé en ce que** le moyen d'étanchéité (9, 19) est constitué de fibres de chanvre.

18. Elément de raccord fileté ou gaine protectrice selon la revendication 17, **caractérisé en ce que** l'élément intérieur et/ou l'élément extérieur (20, 21) est formé d'un matériau composite.

19. Elément de raccord fileté ou gaine protectrice selon l'une quelconque des revendications 10 à 18, **caractérisé en ce que** l'élément intérieur et/ou l'élément extérieur (20, 21) contient des fibres protéiques.

20. Elément de raccord fileté ou gaine protectrice selon l'une quelconque des revendications 10 à 19, **caractérisé en ce que** l'élément intérieur et/ou l'élément extérieur (20, 21) contient de la cellulose.

21. Elément de raccord fileté ou gaine protectrice selon l'une quelconque des revendications 10 à 20, **caractérisé en ce que** l'élément intérieur et/ou l'élément extérieur (20, 21) contient des composants minéraux.

22. Elément de raccord fileté ou gaine protectrice selon l'une quelconque des revendications 10 à 21, **caractérisé en ce que** l'élément intérieur et/ou l'élément extérieur (20, 21) contient respectivement au moins un polymère.

23. Elément de raccord fileté ou gaine protectrice selon l'une quelconque des revendications 1 à 22, **caractérisé en ce que** le moyen d'étanchéité (9, 19) est enrichi d'un matériau inhibant le développement de germes et/ou bactéries et/ou les tuant.

24. Elément de raccord fileté ou gaine protectrice selon la revendication 23, **caractérisé en ce que** le matériau est filiforme ou pulvérulent.

25. Elément de raccord fileté ou gaine protectrice selon la revendication 23 ou 24, **caractérisé en ce que** le matériau est constitué de métal lourd.

26. Elément de raccord fileté ou gaine protectrice selon la revendication 25, **caractérisé en ce que** le matériau est du cuivre.
